# EUROPEAN PATENT APPLICATION

(11) **EP 4 711 121 A1**
(43) Date of publication of application: **18.03.2026**
(21) Application number: 24200799.5
(22) Date of filing: 17.09.2024
(51) Int. Cl.: B29D 11/00

(54) **METHOD AND SYSTEM FOR MANUFACTURING AT LEAST ONE SPECTACLE LENS**

(71) Applicant: Carl Zeiss Vision International GmbH, 73430 Aalen (DE)
(72) Inventor: Wiedemann, Dominik, 73430 Aalen (DE); Friedl, Alexander, 73430 Aalen (DE); Cabral, Katja, 1990-079 Lisboa (PT)
(74) Representative: Altmann Stößel Dick Patentanwälte PartG mbB

(57) **Abstract**

A method for manufacturing at least one spectacle lens, the method comprising:
a) providing at least one spectacle lens, wherein the at least one spectacle lens is subject to undergo at least one manufacturing step being performed by at least one manufacturing machine configured for performing the at least one manufacturing step;
b) generating, by using a measurement system, at least one item of information on at least one property of the at least one spectacle lens, wherein the item of information on the at least one property of the at least one spectacle lens relates to actual measurement data determined by the measurement system through measuring the at least one spectacle lens;
c) applying the item of information on the at least one property of the at least one spectacle lens to a surface of the at least one spectacle lens;
d) performing the at least one manufacturing step on the at least one spectacle lens depending on the item of information on the at least one property of the at least one spectacle lens by using the at least one manufacturing machine.

Furthermore, a corresponding system for manufacturing at least one spectacle lens and a corresponding spectacle lens is disclosed.

## Description

### Technical Field

The present invention relates to a method and a system for manufacturing at least one spectacle lens, and a corresponding spectacle lens.

### Background art

Various methods for the mass production of spectacle lenses, semi-finished spectacle lenses or so-called pucks, semi-finished products or blanks are known. Two customary production methods are casting and injection molding.

In "casting", the thermosetting plastic allyl diglycol carbonate (e.g., CR39) is usually used in spectacle optics. The monomer is typically present in the form of a liquid of low viscosity. In order to obtain a spatially crosslinked solid, a peroxide catalyst is supplied. The casting formulation is then introduced into a tool mold or casting mold having e.g., two (glass) mold shells. An elastic spacer ring is situated between said mold shells. The polymerization takes place for example in the refrigerator/heating cabinet or in the water bath at temperatures of between 50 and 100° C. Since the temperature is intended to be increased very slowly and uniformly, the duration of the polymerization process can be as much as several hours to days depending on the thickness and geometry of the casting. The outstanding mechanical loading capacity of this plastic allows the casting not only of finished products but also of semi-finished products, for example with a first surface (e.g., front surface) already shaped, the second surface (prescription surface; e.g., back surface) of which can be manufactured as desired by milling, grinding and polishing.

"Injection molding" is an efficient method for producing plastic spectacle lenses or semi-finished spectacle lenses in large numbers. In contrast to casting, the plastic (polymer) is already present in granulated form in the case of injection molding. Exemplary plastic materials are thermoplastics such as PMMA (polymethylmethacrylate), PC (polycarbonate), and PS (polystyrene). The granules are melted in the injection cylinder, converted into a homogeneous melt, and injected into the corresponding tool mold at high pressure. After a short cooling phase, the spectacle lenses molded in this way have attained a sufficient dimensional stability and can be removed from the tool mold.

In both cases, by means of the tool mold - besides the desired shape - a code or an identification can be embossed into the semi-finished spectacle lens. During casting/molding, therefore, a code embossed in the tool mold is transferred or molded onto each semi-finished spectacle lens produced by said tool mold. A unique identification of an individual semi-finished spectacle lens is not possible, rather only a subsequent assignment of tool and semi-finished spectacle lens. Alternatively, a code can be embossed into the semi-finished spectacle lens by means of laser engraving.

US 11,079,615 B2 discloses, in a first aspect, that a spectacle lens is selected as including a transparent support in which is coded an identifier readable by an external reading tool for retrieving the identifier. A distant server is contacted using the identifier and data related to the spectacle lens is so gathered. On a second aspect, data related to the spectacle lens is provided to a predetermined database. Upon receiving a request issued from a requester, the database is accessed and at least some of the data is retrieved, the request including at least part of the identifier, and the retrieved data is sent to the requester.

US 2014/0300856 A1 discloses that information is stored in an optical element in the form of a glass or plastic body embodied as spectacles lens, spectacles lens blank or spectacles lens semi-finished product. The information in the form of data is stored on or in the glass or plastic body by creating at least one marking with a marking system. The marking can be read by a reading apparatus. The marking system has an interface for reading information individualizing the optical element. The marking is created permanently by the marking system on or in the optical element at a definition point of a local body-specific coordinate system set by two points on or in the optical element. In this body coordinate system, the manufacturer specifies the position of the lens horizontal and/or the far and/or the near and/or the prism reference point.

US 11,422,388 B2 discloses a method for producing a semi-finished spectacle lens, in particular for identifying and tracking a semi-finished spectacle lens in manufacturing. The document furthermore relates to the use of a sticker for identifying a semi-finished spectacle lens in manufacturing, to a semi-finished spectacle lens and to an apparatus for processing a semi-finished spectacle lens. The semi-finished spectacle lens has an embossed code that is engraved into the semi-finished spectacle lens. The sticker is applied to at least partially cover the embossed code. The sticker can be applied directly onto the semi-finished spectacle lens early in the manufacturing process, for example immediately after molding or injection molding. The sticker can also be applied to the semi-finished spectacle lens before further surface treatment is carried out.

According to US 11,422,388 B2, by virtue of the sticker having a code for unique identification of the semi-finished spectacle lens, not only is a subsequent assignment of tool and semi-finished spectacle lens possible, but an individual lens element can be tracked. By way of example, if a multiplicity of semi-finished spectacle lenses are produced and, after approximately half of the elements to be processed, a problem occurs or a manufacturing parameter "drifts away" then in the case of conventional identification by means of a code embossed in the tool mold, for safety or in order to satisfy the desired high quality requirement, it was necessary to segregate the entire batch and not use it any further. By virtue of the semi-finished spectacle lenses being individually identified, however, it is possible to ascertain the point when a problem occurred, with the result that unaffected elements can continue to be used. Furthermore, in the case of parameters drifting away, targeted countermeasures can be taken by virtue of the fact that an individual correction value for affected elements can be taken into account in subsequent manufacturing steps. In particular, the unique identification of a semi-finished spectacle lens by means of a sticker makes it possible to use so-called big data analyses in the mass production of spectacle lenses. An identification at an early point in time in manufacturing furthermore enables a linking with a manufacturing time in the form of a time stamp or a virtual time stamp, for example, which can be linked with the unique code.

However, the known methods and systems for manufacturing spectacle lenses exhibit various weaknesses in effectively considering fault tolerances. The codes employed for the unique identification of the semi-finished spectacle lenses do indeed allow tracking of individual lenses within the manufacturing process. However, the codes or identification information applied onto the spectacles lenses do not provide suitable opportunities or information that could be useful in influencing the manufacturing process, particularly in the context of fault tolerance, and which might be considered and used to improve the yield rate of spectacle lens manufacturing.

### Problem to be solved

It is therefore an objective of the present invention to provide a method and a system for manufacturing at least one spectacle lens, and a corresponding spectacle lens, which at least partially overcome the above-mentioned problems of the state of the art.

It is a particular objective of the present invention to improve and further develop a method and a system for manufacturing at least one spectacle lens in such a way that the manufacturing process is improved, in particular with respect to a yield rate of the spectacle lens manufacturing.

### Summary

This problem is addressed by a method and a system for manufacturing at least one spectacle lens, and a spectacle lens, with the features of the independent claims. Advantageous embodiments, which might be realized in an isolated fashion or in any arbitrary combination are listed in the dependent claims as well as throughout the specification.

In a first aspect, the present invention relates to a method for manufacturing at least one spectacle lens. The method comprises the following steps that may be performed in the given order. However, a different order may also be possible. In particular, one, more than one or even all of the method steps may be performed once or repeatedly. Further, the method steps may be performed successively or, alternatively, one or more of the method steps may be performed in a timely overlapping fashion or even in a parallel fashion and/or in a combined fashion. The method may further comprise additional method steps that are not listed.

The method comprises:
a) providing at least one spectacle lens, wherein the at least one spectacle lens is subject to undergo at least one manufacturing step being performed by at least one manufacturing machine configured for performing the at least one manufacturing step;
b) generating, by using a measurement system, at least one item of information on at least one property of the at least one spectacle lens, wherein the item of information on the at least one property of the at least one spectacle lens relates to actual measurement data determined by the measurement system through measuring the at least one spectacle lens;
c) applying the item of information on the at least one property of the at least one spectacle lens to a surface of the at least one spectacle lens;
d) performing the at least one manufacturing step on the spectacle lens depending on the item of information on the at least one property of the at least one spectacle lens by using the at least one manufacturing machine.

According to the present invention, it has first been recognized that an enormous improvement with respect to improving the manufacturing process of spectacle lenses, especially with respect to improving the yield rate, can be achieved by considering actual characteristics of a spectacle lens during its manufacturing process. Thus, at least one spectacle lens is provided, wherein the at least one spectacle lens is subject to undergo at least one manufacturing step being performed by at least one manufacturing machine configured for performing the at least one manufacturing step. According to the invention, by using a measurement system, at least one item of information on at least one property of the at least one spectacle lens is generated. The item of information on the at least one property of the at least one spectacle lens relates to actual measurement data that is determined by the measurement system through measuring the at least one spectacle lens. Then, the item of information on the at least one property of the at least one spectacle lens is applied to a surface of the at least one spectacle lens. Further, according to the invention, the at least one manufacturing step on the particular spectacle lens is performed depending on the item of information on the at least one property of the at least one spectacle lens by using the at least one manufacturing machine. For this purpose, the item of information on the at least one property of the at least one spectacle lens may be read by the manufacturing machine prior to the execution of the manufacturing step.

Thus, the present invention provides a method for manufacturing at least one spectacle lens, wherein the manufacturing process is improved, in particular with respect to a yield rate of the lens manufacturing.

In the method, a system for manufacturing at least one spectacle lens according to the present invention, such as according to any one of the embodiments disclosed herein and/or according to any one of the embodiments disclosed in further detail below, may be used.

According to embodiments of the present invention, at least one method step may be a computer-implemented method. As generally used, the term "computer-implemented method" may refer to a method that involves a programmable apparatus, in particular, a computer, a computer network, or a readable medium carrying a program, whereby at least one of the steps of the method, specifically at least one of the method steps a), b), c) and d), may be performed and/or supported by using at least one computer program. Alternatively, the at least one computer program may be accessible by an apparatus which may be adapted for performing the method via a network, such as via an in-house network, a cloud server, or via internet. With particular regard to the present invention, the present method can, thus, being performed on a programmable apparatus that is configured for this purpose, such as by providing a computer program being configured for such a purpose.

The term "spectacle lens" as used herein is a broad term and is to be given its ordinary and customary meaning to a person of ordinary skill in the art and is not to be limited to a special or customized meaning. The term specifically may refer, without limitation, to a lens body that comprises a particular shape that is configured for a purpose of determining and/or altering a vision of a wearer of the spectacle lens. Based on standard ISO 13666:2019, also herein referred to as "Standard", 3.5.2, the term "spectacle lens" may refer to a particular kind of optical lens which is used for determining and/or altering the vision of the wearer of the spectacle lens, wherein the spectacle lens is carried in front of the eye of the wearer, thereby avoiding a direct contact with the eye of a wearer. Instead of the term "wearer", a different term, such as "person", "subject", or "user", may also be applicable. In general, the spectacle lens may be a unifocal lens having a single focal point; may have at least two distinguishable focal points, such as a bifocal lens, a multifocal lens, or a variofocal lens; or may be a progressive lens which comprises a transition between differently focusing portions of the spectacle lens, which, according to the Standard, 3.16, are, typically, distributed over the surface of the spectacle lens in a fashion that a so-denominated "far portion" is designated for providing distance power to be used for altering a so-denoted "far vision", while a so-denominated "near portion" is designated for providing near power to be used for altering a so-denoted "near vision". However, further kinds of spectacle lenses are conceivable. As used herein, the term "spectacle lens" may comprise the spectacle lens at any manufacturing stage, in particular any manufacturing stage as described in the Standard, 3.8. By way of example, the spectacle lens may, thus, comprise a precursor of the spectacle lens, irrespective of a manufacturing stage of the precursor, particularly a semi-finished spectacle lens blank; or a semi-finished spectacle lens; or a finished spectacle lens being ready for receiving at least one additional processing step, particularly selected from a finishing step or a refining step, such as a coating step. However, further manufacturing stages of the spectacle lens are conceivable.

The term "manufacturing" as used herein is a broad term and is to be given its ordinary and customary meaning to a person of ordinary skill in the art and is not to be limited to a special or customized meaning. The term specifically may refer, without limitation, to a process of providing a spectacle lens that can be configured for the intended purpose of determining and/or altering the vision of a wearer of the spectacle lens. Herein, the manufacturing process may comprise a plurality of individual manufacturing steps, wherein each "manufacturing step" may refer to at least one treatment of the spectacle lens. In general, geometric values of one or both surfaces of a spectacle lens may be used as input data for the at least one manufacturing step in a process of producing the particular spectacle lens from a lens blank and/or a semi-finished spectacle lens. For this purpose, at least one manufacturing machine may be used. As generally used, the term "manufacturing machine" may refer to a tool or a device, which is configured for performing at least one manufacturing step. By way of example, the at least one manufacturing step may be selected from grinding, polishing, coating, engraving, taping, inspecting, or measuring one or both surfaces of the spectacle lens. Alternatively or in addition, the at least one manufacturing step may be selected from washing, blocking, or deblocking the spectacle lens. As a further option, the at least one manufacturing step may comprise a step of adapting the spectacle lens to a frame, in particular measuring at least one property of the frame, preferably a geometrical contour for cutting and edging; or fitting the spectacle lens to the frame. However, providing at least one further manufacturing machine that may be configured for performing at least one further manufacturing step may also be feasible.

The term "measurement system" as used herein is a broad term and is to be given its ordinary and customary meaning to a person of ordinary skill in the art and is not to be limited to a special or customized meaning. The term specifically may refer, without limitation, to a system that is configured for measuring a property of a spectacle lens. Thus, the measurement system may be configured to measure one or more optical and/or physical properties of the spectacle lens. For example, the measurement system may comprise a surface contour measurement device configured for determining actual measurement data of the spectacle lens. The surface contour measurement device may be used to measure a height profile of the spectacle lens surface. It may capture the topography and may check and/or analyze whether the entire surface of the spectacle lens is shaped according to specifications. Hence, the surface contour measurement device may check the profile of the spectacle lens to ensure it has the desired properties such as the correct thickness, uniformity, and the absence of defects or irregularities. Furthermore, for instance, the measurement system may comprise a curvature analyzer, which is able to measure the curvature of the front surface of the spectacle lens. This may be crucial for the manufacturing and fitting of spectacle lenses, especially toric and progressive lenses, as the curvature affects optical properties. Furthermore, the measurement system may comprise a lensmeter (which may be also designated as focimeter). The lensmeter may be configured to measure the refractive power of a spectacle lens, e.g., checking whether the spectacle lens has the correct diopter value. The lensmeter may also check the axis for astigmatic spectacle lenses. Further devices and systems are conceivable to be comprised by the measurement system. The measurement system may be configured to collect measurement data, which may comprise information, in particular one or more measured parameter values, relating to
- a power and/or a geometry of the spectacle lens; and/or
- a base curve of the spectacle lens, in particular an actual power or an actual curvature of the spectacle lens; and/or
- a geometrical dimension of the spectacle lens, in particular with regard to an optical thickness and/or to a front curve of the spectacle lens.

The term "at least one item of information on at least one property of the at least one spectacle lens" as used herein is a broad term and is to be given its ordinary and customary meaning to a person of ordinary skill in the art and is not to be limited to a special or customized meaning. The term specifically may refer, without limitation, to information about a characteristic of the spectacle lens that is based on measurement data about the spectacle lens. Further, the term may refer to information about an actual and/or real characteristic of the spectacle lens that is measured by the measurement system. By way of example, the item of information on at least one property of the at least one spectacle lens may comprise a parameter, especially a parameter value, related to the spectacle lens and which may be measured by a measurement system. Further, the item of information may comprise at least one computed parameter, specifying at least one property of the spectacle lens and which is derived from the measured parameter value and/or which is computed based on the measured parameter value. Further, for example, the at least one item of information on at least one property of the at least one spectacle lens may comprise information about an inherent and/or intrinsic defect of the spectacle lens. Furthermore, the at least one item of information on at least one property of the at least one spectacle lens may comprise real curvature information of the spectacle lens.

According to an embodiment of the invention, the providing of at least one spectacle lens, in particular according to step a), may comprise generating the at least one spectacle lens by using a tool mold, wherein the tool mold is configured for molding at least one surface of the at least one spectacle lens. Thus, for example, at least one tool mold may be provided, wherein the tool mold is configured for molding at least one surface of at least one semi-finished spectacle lens. The tool mold may have a mold identifier for unique identification such that the tool mold is identifiable in the context of manufacturing and/or processing the spectacle lens. Thus, it may be provided that, e.g. in a mass production phase, a plurality of semi-finished spectacle lenses is generated by the use of the tool mold. The at least one spectacle lens may be provided and/or conveyed by a transport element, which is configured for receiving and transporting the at least one spectacle lens. For example, the transport element may comprise a carrier, such as a tray, which may be used for receiving and transporting the at least one spectacle lens to at least one measurement system and/or to at least one manufacturing machine.

According to an embodiment of the invention, the measurement system may comprise a surface contour measurement device configured for determining actual measurement data of the at least one spectacle lens. The actual measurement data can be determined such that that at least one item of information on the at least one property of at least one spectacle lens is generable. Thus, real measurement data of the spectacle lens can be determined in order to be considered in a manufacturing step. For this purpose, the at least one item of information on the at least one property of the spectacle lens is applied on the spectacle lens, which is to be processed by a manufacturing machine performing the manufacturing step. Prior to performing the manufacturing step, the at least one item of information on the at least one property of the spectacle lens may be read by a reading unit of the manufacturing machine in order to be considered within the manufacturing step.

According to an embodiment of the invention, the actual measurement data determined by the measurement system may comprise one or more measured parameter values related to a power and/or a geometry of the at least one spectacle lens. For example, a parameter value that is measured by the measurement system may refer to a sphere, a cylinder, an addition and/or a diameter of the spectacle lens. The spherical power, i.e. the sphere value, can indicate the lens power in diopters (dpt) needed to correct nearsightedness (myopia) or farsightedness (hyperopia). It may describe the overall curvature of the spectacle lens and its optical strength. The cylindrical power, i.e. the cylinder value, can correct astigmatism, also measured in diopters. It may specify the difference in curvature between two perpendicular meridians of the spectacle lens. The addition value can be the extra diopter strength needed in multifocal lenses for near vision. It may describe the difference between the prescription for distance vision and near vision. The diameter can refer to the physical size of the spectacle lens, e.g., measured in millimeters. By knowing one or more real parameter values of a spectacle lens, these values and/or information, which specifies at least one property of the spectacle lens, derived therefrom may be taken into account before performing the manufacturing step. Thus, for instance, it may be provided that a spectacle lens is also be kept and processed in the manufacturing, which would be outside the actually permissible tolerance range, as their real properties are then taken into account in the manufacturing step. Thus, the manufacturing step can be adapted dependent on the real properties of the spectacle lens, whereby any deviations are compensable. This enables improved and more precise processing of the spectacle lens. Furthermore, it can increase the yield rate of lens manufacturing.

According to an embodiment of the invention, the actual measurement data determined by the measurement system may comprise one or more measured parameter values for a base curve of the at least one spectacle lens, in particular an actual power or an actual curvature. Thus, for instance, it may be provided that the measurement data comprise an actual power and/or an actual curvature of the spectacle lens, which relates to the base curve of the spectacle lens. In the production of spectacle lenses, power and curvature may be key parameters that determine how light is directed through the lens to correct vision. In this regard, the term "base curve" may refer to the front curvature of the spectacle lens, which provides a fundamental shape on which other optical properties are based. Based on the measurement data, the at least one item of information on at least one property of the spectacle lens can be generated, which may be taken into account for performing a manufacturing step on the spectacle lens. Thus, for example, it may be provided that a spectacle lens is also be kept and processed in the manufacturing, which would be outside the actually permissible tolerance range, as their real properties are then taken into account in the manufacturing step. Thus, the manufacturing step can be adapted dependent on the real properties of the spectacle lens, whereby deviations are compensable. This enables improved and more precise processing of the spectacle lens. Furthermore, it can increase the yield.

According to an embodiment of the invention, the actual measurement data determined by the measurement system may comprise at least one property related to a geometrical dimension of the at least one spectacle lens. Thus, for instance, it may be provided that the measurement data comprise information and/or measured parameter values regarding an optical thickness and/or a front curve of the at least one spectacle lens. Based on the measurement data, the at least one item of information on at least one property of the spectacle lens can be generated, which may be taken into account for performing a manufacturing step on the spectacle lens. Thus, e.g., it may be provided that a spectacle lens is also be kept and processed in the manufacturing, which would be outside the actually permissible tolerance range, as their real properties are then taken into account in the manufacturing step. Thus, the manufacturing step can be adapted dependent on the real properties of the spectacle lens, whereby deviations are compensable. This enables improved and more precise processing of the spectacle lens. Furthermore, it can increase the yield rate of lens manufacturing.

According to an embodiment of the invention, it may be provided that the item of information on the at least one property of the at least one spectacle lens relating to actual measurement data comprises at least one measured parameter related to the at least one spectacle lens. For instance, the item of information on the at least one property of the at least one spectacle lens relating to actual measurement data may comprise at least one measured geometrical parameter and/or at least one measured optical parameter, being related to the at least one spectacle lens. Thus, the manufacturing step of a manufacturing machine can be performed and/or adapted dependent on the real properties of the spectacle lens, whereby deviations are compensable. This enables improved and more precise processing of the spectacle lens. Furthermore, it can increase the yield rate of lens manufacturing.

According to an embodiment of the invention, it may be provided that the item of information on the at least one property of the at least one spectacle lens relating to actual measurement data comprises at least one characteristic parameter that is based on and/or deduced from at least one measured parameter of the at least one spectacle lens. Thus, the manufacturing step of a manufacturing machine can be performed and/or adapted dependent on the real properties of the spectacle lens, whereby deviations are compensable. This enables improved and more precise processing of the spectacle lens. Furthermore, it can increase the yield rate of lens manufacturing.

According to an embodiment of the invention, it may be provided that, in particular in method step c), the item of information on the at least one property of the at least one spectacle lens is applied on an object side surface and/or on an eye-side surface of the at least one spectacle lens.

According to an embodiment of the invention, it may be provided that the item of information on the at least one property of the at least one spectacle lens is applied on the surface of the at least one spectacle lens in the form of a machine-readable code. For example, the item of information on the at least one property of the at least one spectacle lens may be applied on the surface of the at least one spectacle lens in the form of a data matrix code (DMC). Further, by way of example, the item of information on the at least one property of the at least one spectacle lens may, especially, be selected from a permanent mark or a non-permanent mark. For this purpose, the item of information on the at least one property of the at least one spectacle lens may, preferably, be or comprise a barcode, wherein the term "barcode" refers to a machine-readable representation of data, in particular by using a standard barcode, especially selected from a linear code, a data matrix code, or a QR code.

According to an embodiment of the invention, it may be provided that the item of information on the at least one property of the at least one spectacle lens is applied unencoded to the surface of the at least one spectacle lens, such that the item of information on the at least one property of the at least one spectacle lens is manually readable.

According to an embodiment of the invention, it may be provided that the item of information on the at least one property of the at least one spectacle lens is applied to the surface of the at least one spectacle lens by a detachable sticker. Thus, the sticker may have the item of information on the at least one property of the spectacle lens.

According to an embodiment of the invention, it may be provided that the item of information on the at least one property of the at least one spectacle lens is embossed to the surface of the at least one spectacle lens. For instance, the item of information on the at least one property of the spectacle lens may be embossed on one of an object side surface or an eye-side surface of the particular spectacle lens.

According to an embodiment of the invention, it may be provided that the item of information on the at least one property of the at least one spectacle lens is also applied onto a packing cover of the spectacle lens. Thus, the real parameter values of the spectacle lens may be also obtained and/or read from the packaging of the spectacle lens.

According to an embodiment of the invention, the item of information on the at least one property of the at least one spectacle lens may be employed by the at least one manufacturing machine for manufacturing the at least one spectacle lens. Thus, for instance, a reading unit of the manufacturing machine may read the item of information on the at least one property of the at least one spectacle lens in order to perform and/or to adapt the at least one manufacturing step on the at least one spectacle lens depending on the item of information on the at least one property of the at least one spectacle lens. This allows for improved and more precise processing of the spectacle lens and can also increase the yield.

According to an embodiment of the invention, it may be provided that the item of information on the at least one property of the at least one spectacle lens is used for correcting a fudge factor. Furthermore, it may be provided that the fudge factor is applied in calculating at least one process parameter to be used in manufacturing the at least one spectacle lens. A "fudge factor" in spectacle lens manufacturing may refer to a small adjustment or correction made during the production process to compensate for deviations and ensure that the final spectacle lens meets the desired specifications. In optics and particularly in the production of spectacle lenses, various factors can influence the manufacturing process, such as material variations, measurement inaccuracies, or machine calibration issues. The "fudge factor" may be used to counterbalance these deviations and may ensure that the lens achieves the correct optical properties, such as the proper curvature, thickness, and/or refractive power, etc. By using the item of information on the at least one property of the at least one spectacle lens in this context, an improved and more precise processing of the spectacle lens can be enabled. Furthermore, it can increase the yield rate of lens manufacturing.

According to an embodiment of the invention, it may be provided that an actual value comprised by the item of information on the at least one property of the at least one spectacle lens is compared with a target value given for the at least one property of the at least one spectacle lens. By comparing the actual value with the target value, a deviation between said actual value and said target value may be detected and can be taken into account in the execution of the at least one manufacturing step that is performed by the manufacturing machine. For instance, the comparison between the actual value and the target value can be performed within method step d) such that a determined deviation between these values can be considered when performing the manufacturing step according to method step d). Thus, an improved and more precise processing of the spectacle lens can be enabled. Furthermore, it can increase the yield rate of lens manufacturing.

According to an embodiment of the invention, it may be provided that, depending on the item of information on the at least one property of the at least one spectacle lens, at least one of the manufacturing machine and/or the manufacturing step is modified. For example, this can be done within the method step d). Thus, an improved and more precise processing of the spectacle lens can be enabled. Furthermore, it can increase the yield rate of lens manufacturing.

In a further aspect of the present invention, a system for manufacturing at least one spectacle lens is disclosed. The system comprises:
- at least one transport element, wherein the at least one transport element is configured for
   a) providing at least one spectacle lens, wherein the at least one spectacle lens is subject to undergo at least one manufacturing step being performed by at least one manufacturing machine configured for performing the at least one manufacturing step;
- at least one measurement system, wherein the measurement system is configured for
   b) generating, by using the measurement system, at least one item of information on at least one property of the at least one spectacle lens, wherein the item of information on the at least one property of the at least one spectacle lens relates to actual measurement data determined by the measurement system through measuring the at least one spectacle lens;
- at least one marking apparatus, wherein the marking apparatus is configured for
   c) applying the item of information on the at least one property of the at least one spectacle lens to a surface of the at least one spectacle lens;
- at least one manufacturing machine, wherein the manufacturing machine is configured for
   d) performing the at least one manufacturing step on the at least one spectacle lens depending on the item of information on the at least one property of the at least one spectacle lens by using the at least one manufacturing machine.

As generally used, the term "transport element" may refer to an extended object, which is configured for receiving and transporting a plurality of further objects. In accordance with the present invention, a carrier, such as a tray, may be used for receiving and transporting the at least one spectacle lens to the at least one manufacturing machine. In this manner, the at least one transport element may perform a routing of the at least one spectacle lens in an automatic fashion, especially by using, driving, controlling and monitoring at least one transport element, which may be configured for receiving and transporting the carrier. Alternatively or in addition, the transport element may comprise a handling system, in particular selected from a robot or a part thereof. As a further alternative or still in addition, the transport element may comprise at least one of an autonomous mobile robot, an automated guided vehicle, or a drone. As a still further alternative, the routing of the at least one spectacle lens to the at least one manufacturing machine might be performed in a manual fashion. However, using a different type of transport element may also be feasible.

The term "marking apparatus" as used herein is a broad term and is to be given its ordinary and customary meaning to a person of ordinary skill in the art and is not to be limited to a special or customized meaning. The term specifically may refer, without limitation, to an apparatus that can be used to apply various types of markings on objects or surfaces, in particular onto the spectacle lens. The marking apparatus may be used to apply the item of information on the at least one property of the at least one spectacle lens to a surface of the at least one spectacle lens. For instance, the marking apparatus may comprise a laser, in particular an excimer laser. The laser may be configured to generate a spatially displaceable laser beam, by means of which a data matrix code can be written into the spectacle lens. Furthermore, the marking apparatus may be designed for marking the spectacle lens by chiseling, micro-drilling, impressing and/or printing, such that the item of information on the at least one property of the at least one spectacle lens can be applied to the surface of the spectacle lens. Furthermore, the marking apparatus may comprise a printer, which prints the item of information on the at least one property of the at least one spectacle lens on a, preferably removable, sticker. Then, the marking apparatus may be configured for applying the sticker onto the spectacle lens. The marking apparatus may be a component of the measurement system such that the at least one item of information on at least one property of the at least one spectacle lens can be applied onto the spectacle lens.

In a further aspect of the present invention, a spectacle lens is disclosed, wherein the spectacle lens has a surface and at least one item of information on at least one property of the spectacle lens, wherein the item of information on the at least one property of the spectacle lens relates to actual measurement data for the spectacle lens, and wherein the item of information on the at least one property of the spectacle lens is applied to the surface of the particular spectacle lens.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

Further disclosed and proposed herein is a computer program including computer-executable instructions for performing the method according to the present invention in one or more of the embodiments enclosed herein when the instructions are executed on a computer or computer network. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of method steps a) to d) as indicated above may be performed by using a computer or a computer network, preferably by using a computer program.

Further disclosed and proposed herein is a computer program product having program code means, in order to perform the method according to the present invention in one or more of the embodiments enclosed herein when the program is executed on a computer or computer network. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute the method according to one or more of the embodiments disclosed herein.

Further disclosed and proposed herein is a non-transient computer-readable medium including instructions that, when executed by one or more processors, may cause the one or more processors to perform one or more steps of the method according to one or more of the embodiments disclosed herein.

Further disclosed and proposed herein is a computer program product with program code means stored on a machine-readable carrier, in order to perform the method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing the method according to one or more of the embodiments disclosed herein.

Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:
- a computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing the method according to one of the embodiments described in this description, if the program code means are executed on a computer or on a computer network.

Summarizing and without excluding further possible embodiments, the following embodiments may be envisaged:
Embodiment 1: A method for manufacturing at least one spectacle lens, the method comprising:
   a) providing at least one spectacle lens, wherein the at least one spectacle lens is subject to undergo at least one manufacturing step being performed by at least one manufacturing machine configured for performing the at least one manufacturing step;
   b) generating, by using a measurement system, at least one item of information on at least one property of the at least one spectacle lens, wherein the item of information on the at least one property of the at least one spectacle lens relates to actual measurement data determined by the measurement system through measuring the at least one spectacle lens;
   c) applying the item of information on the at least one property of the at least one spectacle lens to a surface of the at least one spectacle lens;
   d) performing the at least one manufacturing step on the at least one spectacle lens depending on the item of information on the at least one property of the at least one spectacle lens by using the at least one manufacturing machine.
Embodiment 2: The method according to the preceding claim, wherein the providing of at least one spectacle lens, in particular according to method step a), comprises
   generating the at least one spectacle lens by using a tool mold, wherein the tool mold is configured for molding at least one surface of the at least one spectacle lens.
Embodiment 3: The method according to any one of the preceding claims, wherein the measurement system comprises a surface contour measurement device configured for determining actual measurement data of the at least one spectacle lens.
Embodiment 4: The method according to any one of the preceding claims, wherein the actual measurement data determined by the measurement system comprise one or more measured parameter values related to a power and/or a geometry of the at least one spectacle lens.
Embodiment 5: The method according to any one of the preceding claims, wherein the actual measurement data determined by the measurement system comprise one or more measured parameter values for a base curve of the at least one spectacle lens, in particular an actual power or an actual curvature.
Embodiment 6: The method according to any one of the preceding claims, wherein the actual measurement data determined by the measurement system comprise at least one property related to a geometrical dimension of the at least one spectacle lens, in particular with regard to an optical thickness and/or to a front curve of the at least one spectacle lens.
Embodiment 7: The method according to any one of the preceding claims, wherein the item of information on the at least one property of the at least one spectacle lens relating to actual measurement data comprises at least one measured parameter, in particular at least one measured geometrical parameter and/or at least one measured optical parameter, related to the at least one spectacle lens.
Embodiment 8: The method according to any one of the preceding claims, wherein the item of information on the at least one property of the at least one spectacle lens relating to actual measurement data comprises at least one characteristic parameter that is based on and/or deduced from at least one measured parameter of the at least one spectacle lens.
Embodiment 9: The method according to any one of the preceding claims, wherein, in particular in method step c), the item of information on the at least one property of the at least one spectacle lens is applied on an object side surface and/or on an eye-side surface of the at least one spectacle lens.
Embodiment 10: The method according to any one of the preceding claims, wherein the item of information on the at least one property of the at least one spectacle lens is applied on the surface of the at least one spectacle lens in the form of a machine-readable code, in particular in the form of a data matrix code.
Embodiment 11: The method according to any one of the preceding claims, wherein the item of information on the at least one property of the at least one spectacle lens is applied unencoded to the surface of the at least one spectacle lens, such that the item of information on the at least one property of the at least one spectacle lens is manually readable.
Embodiment 12: The method according to any one of the preceding claims, wherein the item of information on the at least one property of the at least one spectacle lens is applied to the surface of the at least one spectacle lens by a detachable sticker.
Embodiment 13: The method according to any one of the preceding claims, wherein the item of information on the at least one property of the at least one spectacle lens is embossed to the surface of the at least one spectacle lens.
Embodiment 14: The method according to any one of the preceding claims, wherein the item of information on the at least one property of the at least one spectacle lens is employed by the at least one manufacturing machine for manufacturing the at least one spectacle lens.
Embodiment 15: The method according to any one of the preceding claims, wherein the item of information on the at least one property of the at least one spectacle lens is employed by the at least one manufacturing machine to perform and/or to adapt the at least one manufacturing step on the at least one spectacle lens depending on the item of information on the at least one property of the at least one spectacle lens.
Embodiment 16: The method according to any one of the preceding claims, wherein the item of information on the at least one property of the at least one spectacle lens is used for correcting a fudge factor.
Embodiment 17: The method according to the preceding claim, wherein the fudge factor is applied in calculating at least one process parameter to be used in manufacturing the at least one spectacle lens.
Embodiment 18: The method according to any one of the preceding claims, further comprising, in particular in method step d):
   comparing an actual value comprised by the item of information on the at least one property of the at least one spectacle lens with a target value given for the at least one property of the at least one spectacle lens, wherein a deviation between said actual value and said target value is taken into account in the execution of the at least one manufacturing step according to method step d).
Embodiment 19: The method according to any one of the preceding claims, further comprising, in particular in method step d):
   modifying, depending on the item of information on the at least one property of the at least one spectacle lens, at least one of the manufacturing machine or the manufacturing step.
Embodiment 20: A system for manufacturing at least one spectacle lens, the system comprising:
   - at least one transport element, wherein the at least one transport element is configured for
      a) providing at least one spectacle lens, wherein the at least one spectacle lens is subject to undergo at least one manufacturing step being performed by at least one manufacturing machine configured for performing the at least one manufacturing step;
   - at least one measurement system, wherein the measurement system is configured for
      b) generating, by using the measurement system, at least one item of information on at least one property of the at least one spectacle lens, wherein the item of information on the at least one property of the at least one spectacle lens relates to actual measurement data determined by the measurement system through measuring the at least one spectacle lens;
   - at least one marking apparatus, wherein the marking apparatus is configured for
      c) applying the item of information on the at least one property of the at least one spectacle lens to a surface of the at least one spectacle lens;
   - at least one manufacturing machine, wherein the manufacturing machine is configured for
      d) performing the at least one manufacturing step on the at least one spectacle lens depending on the item of information on the at least one property of the at least one spectacle lens by using the at least one manufacturing machine.
Embodiment 21: A spectacle lens having a surface and at least one item of information on at least one property of the spectacle lens, wherein the item of information on the at least one property of the spectacle lens relates to actual measurement data for the spectacle lens, and wherein the item of information on the at least one property of the spectacle lens is applied to the surface of the spectacle lens.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: schematically illustrates an exemplary embodiment of a method for manufacturing at least one spectacle lens according to the present invention; and
- Figure 2: schematically illustrates an exemplary embodiment of a system for manufacturing at least one spectacle lens according to the present invention.

### Detailed description of the embodiments

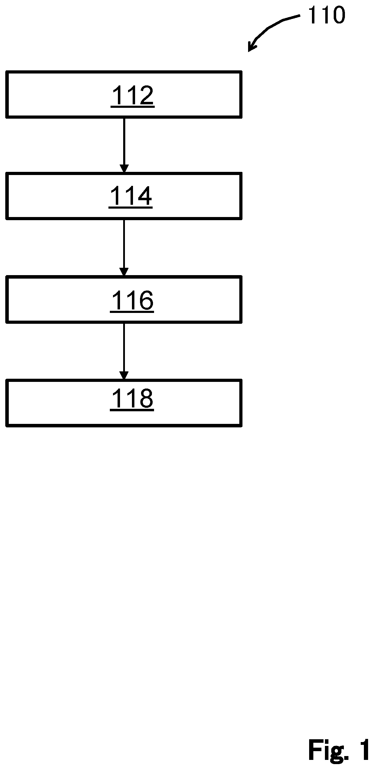

Figure 1 schematically illustrates an exemplary embodiment of a method 110 for manufacturing at least one spectacle lens according to the present invention.

The method 110 comprises the following steps that may be performed in the given order. However, a different order may also be possible. In particular, one, more than one or even all of the method steps may be performed once or repeatedly. Further, the method steps may be performed successively or, alternatively, one or more of the method steps may be performed in a timely overlapping fashion or even in a parallel fashion and/or in a combined fashion. The method may further comprise additional method steps that are not listed.

The method comprises:
a) (denoted by reference number 112) providing at least one spectacle lens, wherein the at least one spectacle lens is subject to undergo at least one manufacturing step being performed by at least one manufacturing machine configured for performing the at least one manufacturing step;
b) (denoted by reference number 114) generating, by using a measurement system, at least one item of information on at least one property of the at least one spectacle lens, wherein the item of information on the at least one property of the at least one spectacle lens relates to actual measurement data determined by the measurement system through measuring the at least one spectacle lens;
c) (denoted by reference number 116) applying the item of information on the at least one property of the at least one spectacle lens to a surface of the at least one spectacle lens;
d) (denoted by reference number 118) performing the at least one manufacturing step on the at least one spectacle lens depending on the item of information on the at least one property of the at least one spectacle lens by using the at least one manufacturing machine.

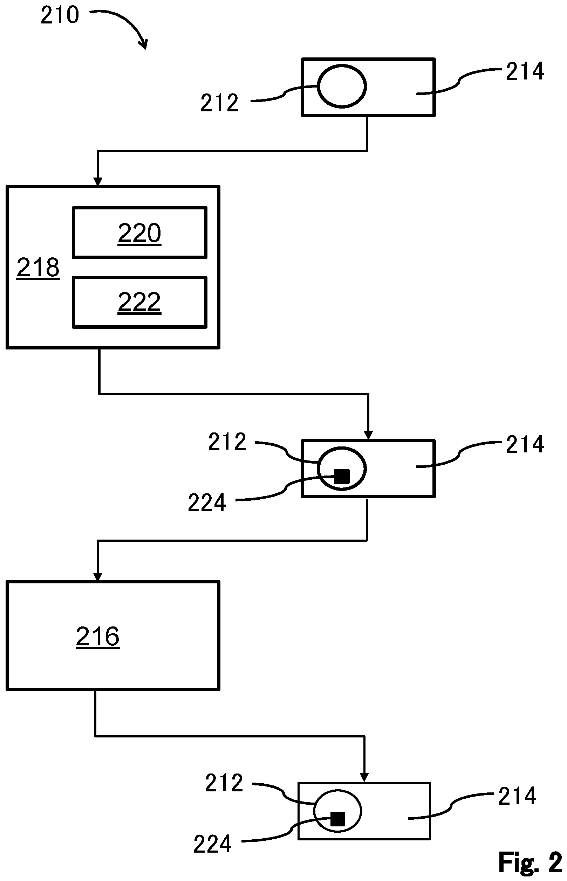

Figure 2 schematically illustrates an exemplary embodiment of a system 210 for manufacturing at least one spectacle lens 212 according to the present invention. The system 210 comprises at least one transport element 214. The at least one transport element 214 is configured for providing the at least one spectacle lens 212. The at least one spectacle lens 212 is subject to undergo at least one manufacturing step being performed by at least one manufacturing machine 216 configured for performing the at least one manufacturing step.

The system 210 further comprises at least one measurement system 218. The measurement system 218 is configured for generating at least one item of information on at least one property of the at least one spectacle lens 212, wherein the item of information on the at least one property of the at least one spectacle lens 212 relates to actual measurement data determined by the measurement system 218 through measuring the at least one spectacle lens 212. The measurement system 218 comprises a surface contour measurement device 220 configured for determining actual measurement data of the spectacle lens. The surface contour measurement device may be used by the measurement system 218 to measure a height profile of the surface of the spectacle lens 212. The measurement system 218, in particular by using the surface contour measurement device 220 may capture the topography of the spectacle lens 212 and may check and/or analyze whether the entire surface of the spectacle lens 212 is shaped according to required specifications. Hence, the surface contour measurement device 220 may check the profile of the spectacle lens 212 to ensure it has the desired properties such as the correct thickness, uniformity, and the absence of defects and/or irregularities. Based on the measured measurement data, the measurement system 218 generates the item of information on the at least one property of the spectacle lens 212.

The measurement system 218 comprises a marking apparatus 222. The marking apparatus 222 is configured for applying the item of information on the at least one property of the at least one spectacle lens 212 to a surface of the spectacle lens 212. The item of information on the at least one property of the at least one spectacle lens 212 is applied on the surface of the spectacle lens 212 in the form of a data matrix code 224.

The system 210 further comprises the at least one manufacturing machine 216. The manufacturing machine 216 is configured for performing the at least one manufacturing step on the spectacle lens 212, wherein the performing of the manufacturing step is dependent on the information included by the data matrix code 224, namely the item of information on the property of the spectacle lens 212.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference numbers

- 110: method for manufacturing at least one spectacle lens
- 112: step a)
- 114: step b)
- 116: step c)
- 118: step d)
- 210: system for manufacturing at least one spectacle lens
- 212: spectacle lens
- 214: transport element
- 216: manufacturing machine
- 218: measurement system
- 220: surface contour measurement device
- 222: marking apparatus
- 224: data matrix code

## Claims

1. A method for manufacturing at least one spectacle lens, the method comprising:
a) providing at least one spectacle lens, wherein the at least one spectacle lens is subject to undergo at least one manufacturing step being performed by at least one manufacturing machine configured for performing the at least one manufacturing step;
b) generating, by using a measurement system, at least one item of information on at least one property of the at least one spectacle lens, wherein the item of information on the at least one property of the at least one spectacle lens relates to actual measurement data determined by the measurement system through measuring the at least one spectacle lens;
c) applying the item of information on the at least one property of the at least one spectacle lens to a surface of the at least one spectacle lens;
d) performing the at least one manufacturing step on the at least one spectacle lens depending on the item of information on the at least one property of the at least one spectacle lens by using the at least one manufacturing machine.

2. The method according to the preceding claim, wherein the measurement system comprises a surface contour measurement device configured for determining actual measurement data of the at least one spectacle lens.

3. The method according to any one of the preceding claims, wherein the actual measurement data determined by the measurement system comprise one or more measured parameter values related to a power and/or a geometry of the at least one spectacle lens.

4. The method according to any one of the preceding claims, wherein the actual measurement data determined by the measurement system comprise one or more measured parameter values for a base curve of the at least one spectacle lens, in particular an actual power or an actual curvature.

5. The method according to any one of the preceding claims, wherein the actual measurement data determined by the measurement system comprise at least one property related to a geometrical dimension of the at least one spectacle lens, in particular with regard to an optical thickness and/or to a front curve of the at least one spectacle lens.

6. The method according to any one of the preceding claims, wherein the item of information on the at least one property of the at least one spectacle lens relating to actual measurement data comprises at least one measured parameter, in particular at least one measured geometrical parameter and/or at least one measured optical parameter, related to the at least one spectacle lens.

7. The method according to any one of the preceding claims, wherein the item of information on the at least one property of the at least one spectacle lens relating to actual measurement data comprises at least one characteristic parameter that is based on and/or deduced from at least one measured parameter of the at least one spectacle lens.

8. The method according to any one of the preceding claims, wherein, in particular in method step c), the item of information on the at least one property of the at least one spectacle lens is applied on an object side surface and/or on an eye-side surface of the at least one spectacle lens.

9. The method according to any one of the preceding claims, wherein the item of information on the at least one property of the at least one spectacle lens is applied on the surface of the at least one spectacle lens in the form of a machine-readable code, in particular in the form of a data matrix code.

10. The method according to any one of the preceding claims, wherein the item of information on the at least one property of the at least one spectacle lens is embossed to the surface of the at least one spectacle lens.

11. The method according to any one of the preceding claims, wherein the item of information on the at least one property of the at least one spectacle lens is employed by the at least one manufacturing machine for manufacturing the at least one spectacle lens.

12. The method according to any one of the preceding claims, further comprising, in particular in method step d):
comparing an actual value comprised by the item of information on the at least one property of the at least one spectacle lens with a target value given for the at least one property of the at least one spectacle lens, wherein a deviation between said actual value and said target value is taken into account in the execution of the at least one manufacturing step according to method step d).

13. The method according to any one of the preceding claims, further comprising, in particular in method step d):
modifying, depending on the item of information on the at least one property of the at least one spectacle lens, at least one of the manufacturing machine or the manufacturing step.

14. A system for manufacturing at least one spectacle lens, the system comprising:
- at least one transport element, wherein the at least one transport element is configured for
a) providing at least one spectacle lens, wherein the at least one spectacle lens is subject to undergo at least one manufacturing step being performed by at least one manufacturing machine configured for performing the at least one manufacturing step;
- at least one measurement system, wherein the measurement system is configured for
b) generating, by using the measurement system, at least one item of information on at least one property of the at least one spectacle lens, wherein the item of information on the at least one property of the at least one spectacle lens relates to actual measurement data determined by the measurement system through measuring the at least one spectacle lens;
- at least one marking apparatus, wherein the marking apparatus is configured for
c) applying the item of information on the at least one property of the at least one spectacle lens to a surface of the at least one spectacle lens;
- at least one manufacturing machine, wherein the manufacturing machine is configured for
d) performing the at least one manufacturing step on the at least one spectacle lens depending on the item of information on the at least one property of the at least one spectacle lens by using the at least one manufacturing machine.

15. A spectacle lens having a surface and at least one item of information on at least one property of the spectacle lens, wherein the item of information on the at least one property of the spectacle lens relates to actual measurement data for the spectacle lens, and wherein the item of information on the at least one property of the spectacle lens is applied to the surface of the spectacle lens.
